(19) Europäisches Patentamt / European Patent Office / Office européen des brevets

(11) **EP 4 589 524 A1**

(12) **EUROPEAN PATENT APPLICATION**
published in accordance with Art. 153(4) EPC

(43) Date of publication:
**23.07.2025 Bulletin 2025/30**

(21) Application number: **23865128.5**

(22) Date of filing: **04.08.2023**

(51) International Patent Classification (IPC):
*G06T 7/00* (2017.01)

(52) Cooperative Patent Classification (CPC):
**G06T 7/00**

(86) International application number:
**PCT/JP2023/028554**

(87) International publication number:
**WO 2024/057768 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.09.2022 JP 2022146397**

(71) Applicant: **FUJIFILM Corporation Tokyo 106-8620 (JP)**

(72) Inventor: **IKEDA, Haruka Tokyo 106-8620 (JP)**

(74) Representative: **Meissner Bolte Partnerschaft mbB
Patentanwälte Rechtsanwälte
Postfach 86 06 24
81633 München (DE)**

(54) **IMAGE GENERATION DEVICE, TRAINING DEVICE, IMAGE PROCESSING DEVICE, IMAGE GENERATION METHOD, TRAINING METHOD, AND IMAGE PROCESSING METHOD**

(57) An image generation apparatus includes at least one first processor. The at least one first processor is configured to acquire a first image; enhance or extract mutually different frequency components in the first image to generate a plurality of frequency-processed images; perform different computational processing on each of the plurality of frequency-processed images; synthesize respective frequency components of the plurality of frequency-processed images on which the computational processing is performed to generate at least one second image; and output the first image and the at least one second image as training data used for machine learning of a mathematical model that performs predetermined inference on an input image.

FIG. 4

## Description

### BACKGROUND OF THE INVENTION

#### 1. Field of the Invention

The disclosed technology relates to an image generation apparatus, a learning apparatus, an image processing apparatus, an image generation method, a learning method, and an image processing method.

#### 2. Description of the Related Art

The following techniques are known for machine learning of mathematical models used in image processing. For example, WO2020/017211A describes a medical image learning apparatus including an image acquisition unit that acquires a first image and a second image whose spectral distributions are different from each other, an image processing unit that performs image processing on the first image to generate a third image, and a learning unit that enables a recognizer used for automatic recognition to learn using the first to third images. The image processing unit generates the third image from the first image by performing at least one of image processing for suppressing signals in a band included in the spectral distribution of the first image and having different characteristics from a band corresponding to the second image, or image processing for enhancing signals in a band included in the first image and having characteristics that are the same as or similar to those of the band corresponding to the second image.

WO2020/175446A describes a learning method for performing machine learning of a generative model that estimates, from a first image, a second image including higher resolution image information than the first image. In this method, a first learning image and a second learning image are used as learning data. The first learning image includes first resolution information having lower resolution than the second image. The second learning image includes second resolution information having higher resolution than the first learning image, and serves as a ground truth image corresponding to the first learning image.

### SUMMARY OF THE INVENTION

In non-destructive inspection of industrial products using radiographic images, attempts have been made to detect defects (flaws) caused inside the products using mathematical models such as a convolutional neural network (CNN) constructed by machine learning. Machine learning typically suffers from insufficient training data relative to the complexity of problems to be solved. So-called "data augmentation" is often performed to secure as many variations as possible from a limited amount of data. For example, when the training data is image data, the accuracy of a mathematical model being trained can be expected to improve by adding, to the training data, processed versions of an original image, such as the result of increasing or decreasing brightness (pixel values), altering contrast, performing scaling processing, changing the blend ratio of color channels in color images, applying rotation, or performing inversion.

In machine learning of mathematical models used for image recognition, in some cases, even a typical data augmentation technique as described above cannot fully compensate for the lack of real data. Particularly in radiographic images used for non-destructive inspection of an industrial product, various types of information, such as undulations due to thickness variations of a target object (product) itself and the shape features of the target object (product) itself, are captured as background along with a defect (flaw) to be detected. As a result, enormous variations of images are to be prepared as training data, but it is not easy to prepare image sets that cover the diversity of background information.

The disclosed technology has been developed in consideration of the above-mentioned points, and an object thereof is to expand the variations of image sets used as training data in machine learning.

An image generation apparatus according to the disclosed technology includes at least one first processor. The at least one first processor is configured to acquire a first image; enhance or extract mutually different frequency components in the first image to generate a plurality of frequency-processed images; perform different computational processing on each of the plurality of frequency-processed images; synthesize respective frequency components of the plurality of frequency-processed images on which the computational processing is performed to generate at least one second image; and output the first image and the at least one second image as training data used for machine learning of a mathematical model that performs predetermined inference on an input image.

The at least one first processor may be configured to perform, as the computational processing, processing for applying mutually different weight coefficients to the plurality of frequency-processed images. The at least one first processor may be configured to generate a first frequency-processed image including relatively low frequency components and a second frequency-processed image including relatively high frequency components; and perform, as the computational processing, processing for applying a relatively small weight coefficient to the first frequency-processed image and applying a relatively large weight coefficient to the second frequency-processed image. The at least one first processor may be configured to perform, as the computational processing, processing on each of the plurality of frequency-processed images to enlarge a difference from an average value of brightness values for each pixel by a different magnification factor.

The at least one first processor may be configured to perform filter processing on the first image to generate a first frequency-processed image; and subtract frequency components of the first frequency-processed image from the first image to generate a second frequency-processed image. The at least one first processor may be configured to perform normalization processing on the first image and the at least one second image to normalize brightness. The first image may be a radiographic image including an image of a specific structural part of a target object in a specific frequency domain, and the mathematical model may be a model that detects the image of the specific structural part included in the radiographic image.

A learning apparatus according to the disclosed technology includes at least one second processor. The at least one second processor is configured to train the mathematical model using, as training data, the first image and the at least one second image provided from the image generation apparatus described above. The at least one second processor may be configured to perform normalization processing on the first image and the at least one second image to normalize brightness.

An image processing apparatus according to the disclosed technology includes at least one third processor. The at least one third processor is configured to output a detection result of an image of a specific structural part of a target object for an input image using the mathematical model trained by the learning apparatus described above. The at least one third processor may be configured to acquire the input image; enhance or extract a specific frequency component in the input image to generate a frequency-processed image; input the input image to the mathematical model to acquire a first inference result; input the frequency-processed image to the mathematical model to acquire a second inference result; and output the detection result by comprehensively evaluating the first inference result and the second inference result.

An image generation method according to the disclosed technology includes processing performed by at least one first processor that an image generation apparatus has. The processing includes acquiring a first image; enhancing or extracting mutually different frequency components in the first image to generate a plurality of frequency-processed images; performing different computational processing on each of the plurality of frequency-processed images; synthesizing respective frequency components of the plurality of frequency-processed images on which the computational processing is performed to generate at least one second image; and outputting the first image and the second image as training data used for machine learning of a mathematical model that performs predetermined inference on an input image.

A learning method according to the disclosed technology includes processing performed by at least one second processor that a learning apparatus has. The processing includes training the mathematical model using, as training data, the first image and the at least one second image provided using the image generation method described above.

An image processing method according to the disclosed technology includes processing performed by at least one third processor that an image processing apparatus has. The processing includes outputting a detection result of an image of a specific structural part of a target object for an input image using the mathematical model trained by the learning method described above.

The disclosed technology makes it possible to expand the variations of image sets used as training data in machine learning.

## BRIEF DESCRIPTION OF THE DRAWINGS

Fig. 1 is a diagram illustrating an example of a configuration of an image processing system according to an embodiment of the disclosed technology;
Fig. 2 is a diagram illustrating an example of a hardware configuration of an image generation apparatus according to the embodiment of the disclosed technology;
Fig. 3 is a functional block diagram illustrating an example of a functional configuration of the image generation apparatus according to the embodiment of the disclosed technology;
Fig. 4 is a diagram illustrating an example of a process flow performed in the image generation apparatus according to the embodiment of the disclosed technology;
Fig. 5 is a flowchart illustrating an example of the flow of an image generation process according to the embodiment of the disclosed technology;
Fig. 6 is a diagram illustrating an example of a hardware configuration of a learning apparatus according to the embodiment of the disclosed technology;
Fig. 7 is a functional block diagram illustrating an example of a functional configuration of the learning apparatus according to the embodiment of the disclosed technology;
Fig. 8 is a diagram illustrating an example of a hardware configuration of an image processing apparatus according to the embodiment of the disclosed technology;
Fig. 9 is a functional block diagram illustrating an example of a functional configuration of the image processing apparatus according to the embodiment of the disclosed technology;
Fig. 10 is a diagram illustrating an example of a process flow performed in the image processing apparatus according to the embodiment of the disclosed technology; and
Fig. 11 is a flowchart illustrating an example of the flow of a defect detection process according to the embodiment of the disclosed technology.

## DESCRIPTION OF THE PREFERRED EMBODIMENTS

Hereinafter, an example of an embodiment of the disclosed technology will be described with reference to the drawings. In the drawings, the same or equivalent components and parts are denoted by the same reference numerals, and redundant descriptions will be omitted.

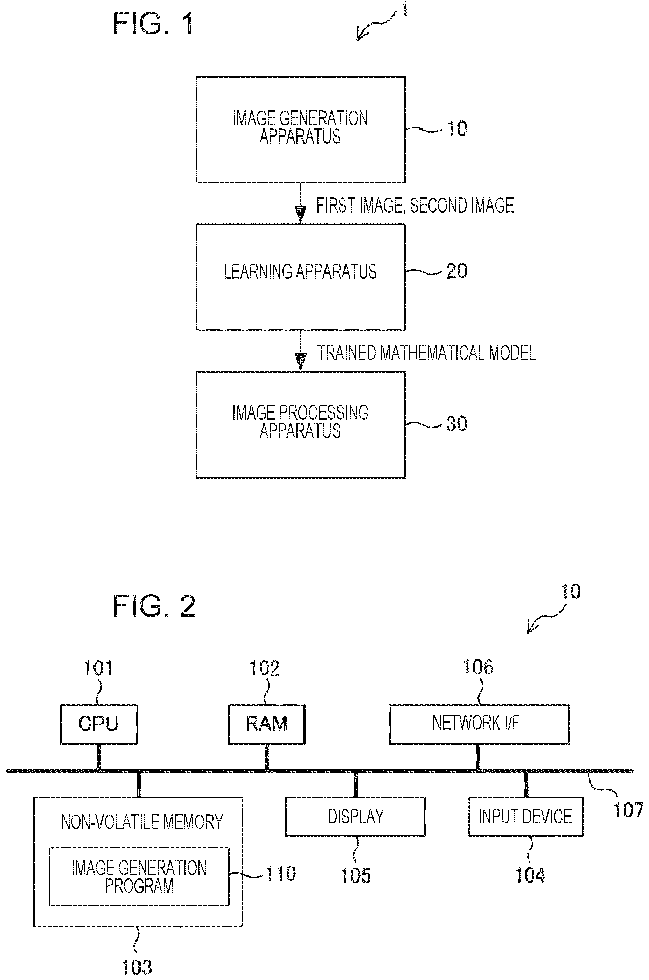

Fig. 1 is a diagram illustrating an example of a configuration of an image processing system 1 according to an embodiment of the disclosed technology. The image processing system 1 has an image generation apparatus 10, a learning apparatus 20, and an image processing apparatus 30. The image generation apparatus 10 performs frequency processing on a first image to generate a second image, and outputs the first image and the second image as training data used for machine learning of a mathematical model that performs predetermined inference on an input image. The learning apparatus 20 trains the mathematical model using the first image and the second image provided from the image generation apparatus 10 as training data. The image processing apparatus 30 outputs, using the mathematical model trained by the learning apparatus 20, a detection result of an image of a specific structural part of a target object for the input image.

Hereinafter, details of the image generation apparatus 10, the learning apparatus 20, and the image processing apparatus 30 will be sequentially described. In the following description, by way of example, an image handled in the image processing system 1 is a radiographic image acquired in non-destructive inspection of an industrial product. The radiographic image may include an image of a defect (flaw) caused inside the target object. In the following description, by way of example, the mathematical model handled in the image processing system 1 is a defect detection model that detects a defect (flaw) included in the radiographic image, and the image processing apparatus 30 detects the defect (flaw) included in the radiographic image using the defect detection model. In the following description, furthermore, by way of example, the image generation apparatus 10, the learning apparatus 20, and the image processing apparatus 30 are configured as separate computers.

Image Generation Apparatus

Fig. 2 is a diagram illustrating an example of a hardware configuration of the image generation apparatus 10. The image generation apparatus 10 includes a central processing unit (CPU) 101, a random access memory (RAM) 102, a non-volatile memory 103, an input device 104, a display 105, and a network interface 106. These hardware components are connected to a bus 107. The display 105 is, for example, a liquid crystal display. The input device 104 includes, for example, a keyboard and a mouse, and may include a proximity input device such as a touch panel display, and an audio input device such as a microphone. The network interface 106 is an interface for connecting the image generation apparatus 10 to a network.

The non-volatile memory 103 is a non-volatile storage medium such as a hard disk or a flash memory. The non-volatile memory 103 stores an image generation program 110. The RAM 102 is a work memory for the CPU 101 to execute processing. The CPU 101 loads the image generation program 110 stored in the non-volatile memory 103 into the RAM 102, and executes processing in accordance with the image generation program 110. The CPU 101 is an example of a "first processor" in the disclosed technology.

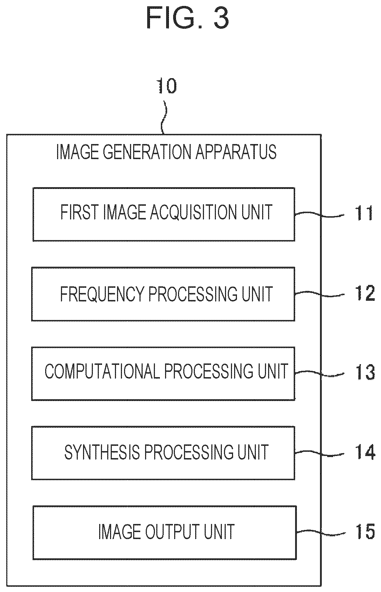

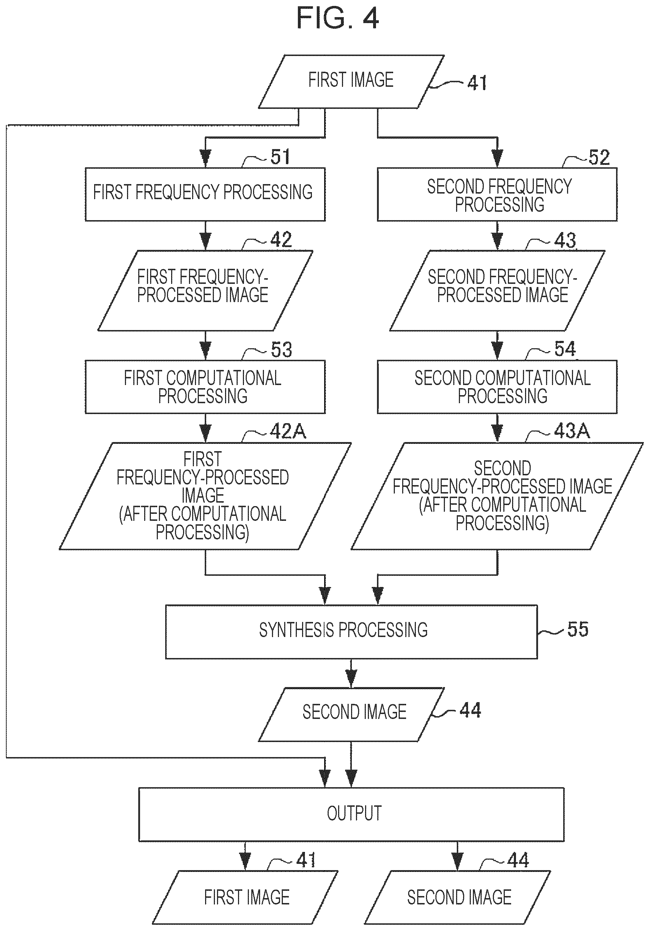

Fig. 3 is a functional block diagram illustrating an example of a functional configuration of the image generation apparatus 10. The image generation apparatus 10 functions as a first image acquisition unit 11, a frequency processing unit 12, a computational processing unit 13, a synthesis processing unit 14, and an image output unit 15 when the CPU 101 executes the image generation program 110. Fig. 4 is a diagram illustrating an example of a process flow performed in the image generation apparatus 10. Hereinafter, the functions of the above-described functional units of the image generation apparatus 10 will be described with reference to Fig. 4.

The first image acquisition unit 11 acquires a first image 41. The first image 41 is a radiographic image acquired in non-destructive inspection of an industrial product. The first image 41 includes an image of a defect (flaw) caused inside a target object (product). A typical image can be interpreted by decomposing it into spatial frequency components. The image of the defect (flaw) is in a relatively high frequency domain of the first image 41. For example, when the first image 41 has a resolution of 25 to 100 $\mu$m/px, the image of the defect (flaw) has 1 to 2 px at its smallest. The first image 41 may be an original image or an image obtained by performing preprocessing other than frequency processing described below, such as upscaling, downscaling, rotation, and tone processing, on the original image. The first image acquisition unit 11 may perform the preprocessing.

The frequency processing unit 12 performs first frequency processing 51 on the first image 41 to generate a first frequency-processed image 42. The first frequency processing 51 is processing for extracting low-frequency components from the first image 41 or processing for enhancing the low-frequency components in the first image 41. The first frequency processing 51 may be, for example, filter processing using a low-pass filter. The first frequency processing 52 is known as a noise removal method. This processing can also be implemented using a median filter, an averaging filter, a Gaussian filter, or a bilateral filter. In the first frequency-processed image 42, most of the image of the defect (flaw) included in the first image 41 are removed, whereas the image of the background such as the undulations due to thickness variations of the target object (product) itself or the shape features of the target object (product) itself remains unremoved.

The frequency processing unit 12 further performs second frequency processing 52 on the first image 41 to generate a second frequency-processed image 43. The second frequency processing 52 is processing for extracting high-frequency components from the first image 41 or processing for enhancing the high-frequency components in the first image 41. The second frequency processing 52 may be, for example, filter processing using a high-pass filter. The frequency processing unit 12 can also generate the second frequency-processed image 43 by subtracting the frequency components of the first frequency-processed image 42 from the first image 41. In the second frequency-processed image 43, most of the image of the background such as undulations due to thickness variations of the target object (product) itself or the shape features of the target object (product) itself are removed, whereas the image of the defect (flaw) included in the first image 41 remains unremoved. That is, the image of the defect (flaw) is more clearly depicted in the second frequency-processed image 43.

The computational processing unit 13 performs first computational processing 53 on the first frequency-processed image 42 and performs second computational processing 54 different from the first computational processing 53 on the second frequency-processed image 43. For example, the computational processing unit 13 may perform, as the first computational processing 53, processing for applying a relatively small weight coefficient $w_1$ ($\geq 0$) to the first frequency-processed image 42, and may perform, as the second computational processing 54, processing for applying a relatively large weight coefficient $w_2$ ($> w_1$) to the second frequency-processed image 43. That is, when each pixel of the first frequency-processed image 42 has a brightness value represented by $P1_{x,y}$, the computational processing unit 13 outputs $w_1 \times P1_{x,y}$ as a first frequency-processed image 42A after the first computational processing. When each pixel of the second frequency-processed image 43 has a brightness value represented by $P2_{x,y}$, the computational processing unit 13 outputs $w_2 \times P2_{x,y}$ as a second frequency-processed image 43A after the second computational processing. The weight coefficient $w_1$ to be applied to the first frequency-processed image 42, which mainly includes low-frequency components, may be set to zero. The computational processing unit 13 may change the combination of the weight coefficients $w_1$ and $w_2$ to generate a plurality of image pairs, each being a pair of the first frequency-processed image 42A and the second frequency-processed image 43A after the computational processing.

Instead of or in addition to the processing for applying weight coefficients having mutually different magnitudes to the first frequency-processed image 42 and the second frequency-processed image 43, the computational processing unit 13 may perform, as computational processing, processing for performing contrast enhancement on the first frequency-processed image 42 and the second frequency-processed image 43 at different intensities. Specifically, the first computational processing 53 may perform, as the first computational processing 53, processing on the first frequency-processed image 42 to enlarge the difference from an average value of brightness values for each pixel by a magnification factor $m_1$ ($> 0$), and may perform, as the second computational processing 54, processing on the second frequency-processed image 43 to enlarge the difference from an average value of brightness values for each pixel by a magnification factor $m_2$ ($> m_1$) larger than $m_1$. The computational processing unit 13 may change the combination of the magnification factors $m_1$ and $m_2$ to generate a plurality of image pairs, each being a pair of the first frequency-processed image 42A and the second frequency-processed image 43A after the computational processing.

The synthesis processing unit 14 performs synthesis processing 55 to synthesize the frequency components of the first frequency-processed image 42A on which the first computational processing 53 is performed and the frequency components of the second frequency-processed image 43A on which the second computational processing 54 is performed, and generates at least one second image 44. For example, when the computational processing unit 13 performs processing for applying the weight coefficients $w_1$ and $w_2$ to the first frequency-processed image 42 and the second frequency-processed image 43, respectively, the synthesis processing 55 generates the second image 44 by performing weighted addition processing on the first frequency-processed image 42 and the second frequency-processed image 43. Setting $w_1 < w_2$ makes it possible to obtain the second image 44 in which the image of the defect (flaw) present in the high-frequency domain is further enhanced. Setting $w_1$ to zero causes the second frequency-processed image 43 to become substantially the second image 44, and the image of the defect (flaw) is depicted more clearly in the second image 44. When a plurality of image pairs, each being a pair of the first frequency-processed image 42A and the second frequency-processed image 43A after the computational processing, are generated, the synthesis processing unit 14 performs the synthesis processing 55 on each of the plurality of image pairs. As a result, a plurality of second images 44 are generated from the single first image 41.

The image output unit 15 outputs the first image 41 acquired by the first image acquisition unit 11 and at least one second image 44 generated based on the first image 41 as training data used for machine learning of a mathematical model that performs predetermined inference on an input image. The image output unit 15 may perform normalization processing on the first image 41 and the second image 44 to normalize the brightness of each pixel before outputting these images. The normalization processing is expressed by, for example, equation (1) below. In equation (1), $X_{norm}$ is a brightness value after the normalization processing. X is the brightness value before normalization. $X_{max}$ is the maximum value of brightness (for example, 255). $X_{min}$ is the minimum value of brightness (for example, 0). The normalization processing makes it possible to suppress a significant divergence in brightness distribution between the first image 41 and the second image 44.

$$X_{norm} = (X - X_{min})/(X_{max} - X_{min}) \ ... \ (1)$$

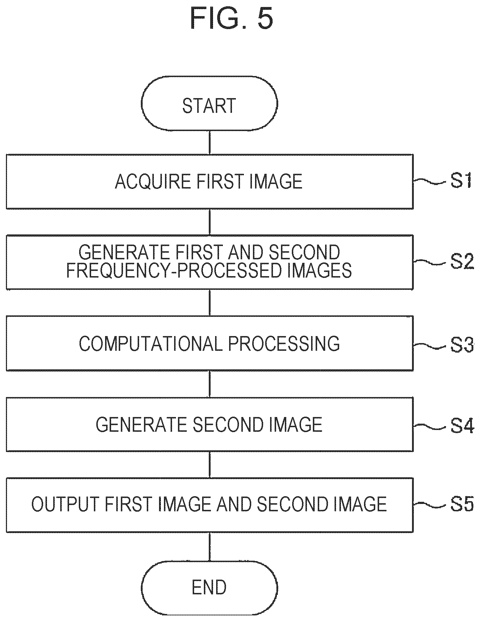

Fig. 5 is a flowchart illustrating an example of the flow of an image generation process implemented by the CPU 101 executing the image generation program 110. The image generation program 110 is executed when, for example, a user gives an instruction to start the process by operating the input device 104.

In step S1, the first image acquisition unit 11 acquires the first image 41. The first image 41 may be an original image or an image obtained by performing preprocessing other than frequency processing, such as upscaling, downscaling, rotation, and tone processing, on the original image. The first image acquisition unit 11 may perform the preprocessing.

In step S2, the frequency processing unit 12 enhances or extracts mutually different frequency components in the first image 41 acquired in step S1 to generate the first frequency-processed image 42 and the second frequency-processed image 43. The first frequency-processed image 42 mainly includes low-frequency components.

In step S3, the computational processing unit 13 performs different computational processing on each of the first frequency-processed image 42 and the second frequency-processed image 43 generated in step S2. For example, the computational processing unit 13 performs, as the first computational processing 53, processing for applying a relatively small weight coefficient $w_1$ ($\geq 0$) to the first frequency-processed image 42, and performs, as the second computational processing 54, processing for applying a relatively large weight coefficient $w_2$ ($> w_1$) to the second frequency-processed image 43. The computational processing unit 13 may change the combination of the weight coefficients $w_1$ and $w_2$ to generate a plurality of image pairs, each being a pair of the first frequency-processed image 42A and the second frequency-processed image 43A after the computational processing.

In step S4, the synthesis processing unit 14 synthesizes the respective frequency components of the first frequency-processed image 42A and the second frequency-processed image 43A on which the computational processing is performed in step S3 to generate at least one second image 44. When a plurality of image sets, each being a set of the first frequency-processed image 42A and the second frequency-processed image 43A after the computational processing, are generated, the synthesis processing unit 14 performs the synthesis processing 55 on each of the image sets. As a result, a plurality of second images 44 are generated.

In step S5, the image output unit 15 outputs the first image 41 acquired in step S1 and the at least one second image 44 generated in step S4 as training data used for machine learning of a mathematical model that performs predetermined inference on an input image. The image output unit 15 may perform normalization processing on the first image 41 and the second image 44 to normalize the brightness of each pixel before outputting these images.

As described above, the image generation apparatus 10 according to the embodiment of the disclosed technology acquires the first image 41, and enhances or extracts mutually different frequency components in the first image 41 to generate a plurality of frequency-processed images. The image generation apparatus 10 performs different computational processing on each of the plurality of frequency-processed images, and synthesizes the respective frequency components of the plurality of frequency-processed images on which the computational processing is performed to generate at least one second image 44. The image generation apparatus 10 outputs the first image 41 and the second image 44 as training data used for machine learning of a mathematical model that performs predetermined inference on an input image.

In machine learning of mathematical models for image recognition, even when a typical data augmentation technique such as increasing or decreasing brightness (pixel values), altering contrast, performing scaling processing, changing the blend ratio of color channels in color images, applying rotation, or performing inversion is used for an original image, the lack of real data cannot be fully compensated for. Particularly in radiographic images used for non-destructive inspection of an industrial product, various types of information, such as undulations due to thickness variations of a target object (product) itself and the shape features of the target object (product) itself, are captured as background along with a defect (flaw) to be detected. As a result, enormous variations of images are to be prepared as training data, but it is not easy to prepare image sets that cover the diversity of background information.

In the image generation apparatus 10 according to the embodiment of the disclosed technology, the second image 44 is generated based on the first image 41, which is the original image, and both the first image 41 and the second image 44 are provided as training data. Thus, the training data can be augmented.

The second image 44 is an image obtained by performing different computational processing on each of the first frequency-processed image 42 and the second frequency-processed image 43 and synthesizing the frequency components of the first frequency-processed image 42 and the second frequency-processed image 43. For example, the combination of the weight coefficients used in computational processing is changed to make variations to the computational processing. Accordingly, a plurality of second images 44 can be generated. As a result, further data augmentation can be implemented, allowing for diversity in the training data. As described above, the image generation apparatus 10 according to the embodiment of the disclosed technology makes it possible to expand the variations of image sets used as training data in machine learning.

In addition, since the second image 44 is an image obtained by synthesizing the frequency components of the first frequency-processed image 42 and the second frequency-processed image 43, the appearance of the image of the defect (flaw) present in the high-frequency domain and the appearance of the image of the background present in the low-frequency domain can be adjusted independently. For example, computational processing is performed such that the relatively small weight coefficient $w_1$ is applied to the first frequency-processed image 42 mainly including low-frequency components and the relatively large weight coefficient $w_2$ is applied to the second frequency-processed image 43 mainly including high-frequency components, and then the frequency components of these images are synthesized. Accordingly, the second image 44 in which the image of the defect (flaw) present in the high-frequency domain is more enhanced can be obtained. Further, setting $w_1$ to zero causes the second frequency-processed image 43 to become substantially the second image 44, and the image of the defect (flaw) is depicted more clearly in the second image 44. In machine learning of a defect detection model that detects a defect (flaw) in an input image, images in which the defect (flaw) to be detected is enhanced are used as training data, thereby allowing for more clearly instructing the defect detection model on the image characteristics of the defect (flaw). As a result, the defect detection accuracy in the defect detection model can be improved.

While the present embodiment presents an example in which the frequency processing unit 12 generates two frequency-processed images (the first frequency-processed image 42 and the second frequency-processed image 43), the disclosed technology is not limited to this configuration. The frequency processing unit 12 may generate three or more frequency-processed images by enhancing or extracting mutually different frequency components in the first image 41. This configuration allows for further increasing the variations of computational processing performed in the computational processing unit 13, enabling the generation of more diverse second images 44.

Learning Apparatus

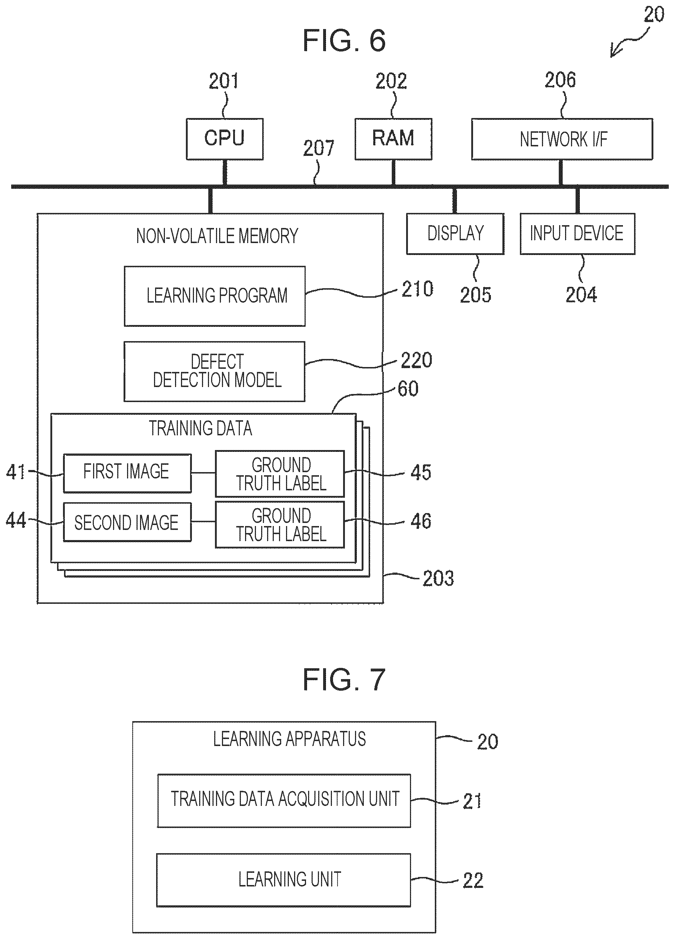

Fig. 6 is a diagram illustrating an example of a hardware configuration of the learning apparatus 20. The hardware configuration of the learning apparatus 20 is similar to the hardware configuration of the image generation apparatus 10. The learning apparatus 20 includes a CPU 201, a RAM 202, a non-volatile memory 203, an input device 204, a display 205, and a network interface 206. These hardware components are connected to a bus 207. The CPU 201 is an example of a "second processor" in the disclosed technology.

The non-volatile memory 203 stores a learning program 210, a defect detection model 220, and training data 60. The defect detection model 220 is a mathematical model based on a CNN constructed to predict class labels pixel by pixel for an input image. The defect detection model 220 may be, for example, a model that applies a known encoder-decoder model (ED-CNN: Encoder-Decoder Convolutional Neural Network). The encoder-decoder model is a model constituted by an encoder that extracts features from an image using convolutional layers and a decoder that outputs a probability map based on the extracted features. The probability map is the result of deriving the probability that each pixel of the input image belongs to a certain class, on a per-pixel basis. The defect detection model 220 is constructed by machine learning using a plurality of radiographic images with ground truth labels as training data. The training data 60 is a dataset that treats the first image 41 and the second image 44 supplied from the image generation apparatus 10 and ground truth labels 45 and 46 assigned to these images as one unit. A plurality of pieces of training data 60 are stored in the non-volatile memory 203. The training data 60 is used for machine learning of the defect detection model 220.

Fig. 7 is a functional block diagram illustrating an example of a functional configuration of the learning apparatus 20. The learning apparatus 20 functions as a training data acquisition unit 21 and a learning unit 22 when the CPU 201 executes the learning program 210. The training data acquisition unit 21 acquires the training data 60 stored in the non-volatile memory 203. The learning unit 22 trains the defect detection model 220 using the training data 60 acquired by the training data acquisition unit 21 by using, for example, the backpropagation method.

Instead of the image output unit 15 of the image generation apparatus 10, the training data acquisition unit 21 or the learning unit 22 of the learning apparatus 20 may perform the normalization processing on the first image 41 and the second image 44, which are the training data 60, to normalize the brightness of each pixel. The normalization processing makes it possible to prevent a significant divergence in brightness distribution between the first image 41 and the second image 44. If a significant divergence occurs in brightness distribution between the first image 41 and the second image 44, the defect detection model 220 may unintentionally distinguish between the first image 41 and the second image 42, and may fail to extract features of a defect (flaw) present in common in these images. The normalization processing performed on the first image 41 and the second image 44 can make it less likely that the defect detection model 220 unintentionally distinguishes between the first image 41 and the second image 44.

As described above, the learning apparatus 20 according to the embodiment of the disclosed technology trains the defect detection model 220 using the first image 41 and the second image 44 generated by the image generation apparatus 10 as training data. In the learning apparatus 20 according to the present embodiment, the defect detection model 220 is trained using the training data 60 augmented by the second image 44. Thus, the defect detection accuracy in the defect detection model 220 can be improved.

The processes for generating the second image 44 may be performed in the learning apparatus 20 instead of the image generation apparatus 10. Further, the processes for generating the second image 44 may be performed in an input layer of the defect detection model 220.

Image Processing Apparatus

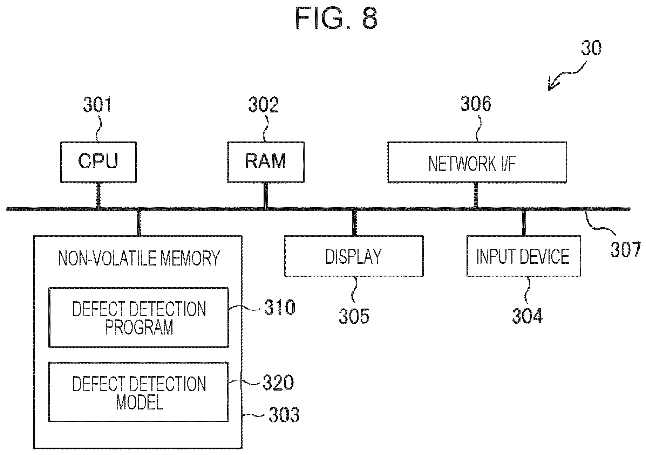

Fig. 8 is a diagram illustrating an example of a hardware configuration of the image processing apparatus 30. The hardware configuration of the image processing apparatus 30 is similar to the hardware configuration of the image generation apparatus 10. The image processing apparatus 30 includes a CPU 301, a RAM 302, a non-volatile memory 303, an input device 304, a display 305, and a network interface 306. These hardware components are connected to a bus 307. The CPU 301 is an example of a "third processor" in the disclosed technology. The non-volatile memory 303 stores a defect detection program 310 and a trained defect detection model 320. The defect detection model 320 is a mathematical model trained by the learning apparatus 20.

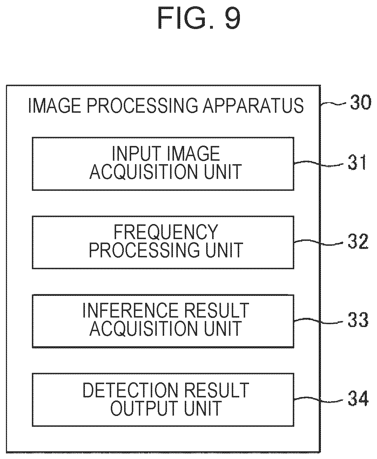

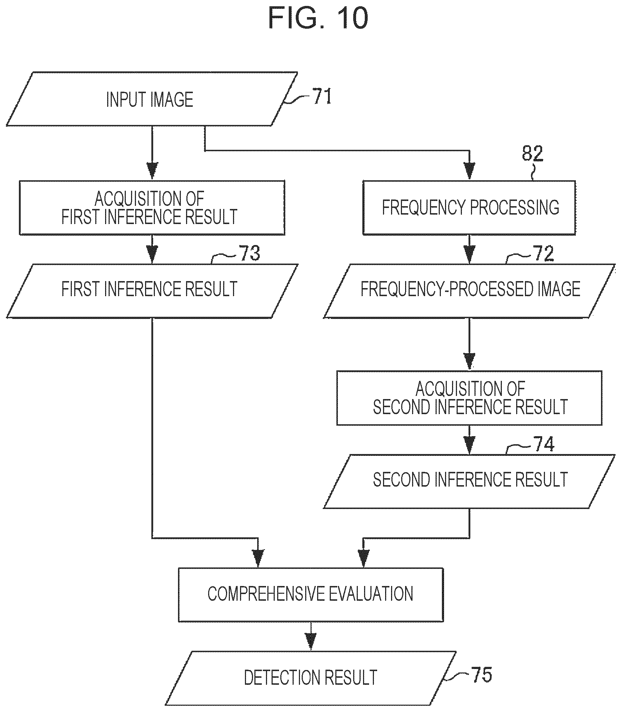

Fig. 9 is a functional block diagram illustrating an example of a functional configuration of the image processing apparatus 30. The image processing apparatus 30 functions as an input image acquisition unit 31, a frequency processing unit 32, an inference result acquisition unit 33, and a detection result output unit 34 when the CPU 301 executes the defect detection program 310. Fig. 10 is a diagram illustrating an example of a process flow performed in the image processing apparatus 30. Hereinafter, the functions of the above-described functional units of the image processing apparatus 30 will be described with reference to Fig. 10.

The input image acquisition unit 31 acquires an input image 71 that is input as a processing target of the image processing apparatus 30. The input image 71 is a radiographic image similar to the first image 41. The input image 71 may be an image obtained by performing preprocessing other than frequency processing, such as upscaling, downscaling, rotation, and tone processing, on an original image. The input image acquisition unit 31 may perform the preprocessing.

The frequency processing unit 32 performs frequency processing 82 on the input image 71 to generate a frequency-processed image 72. The frequency processing 82 may be, for example, processing for extracting high-frequency components from the input image 71 or processing for enhancing the high-frequency components in the input image 71. The frequency processing 82 may be processing for extracting or enhancing frequency components that are the same as or different from the frequency components extracted or enhanced in the second frequency processing 52 performed in the image generation apparatus 10. The frequency processing unit 32 may generate a plurality of frequency-processed images 72 by enhancing or extracting mutually different frequency components in the input image 71.

The inference result acquisition unit 33 inputs the input image 71 to the trained defect detection model 320 to acquire a first inference result 73. The inference result acquisition unit 33 further inputs the frequency-processed image 72 to the trained defect detection model 320 to acquire a second inference result 74. When a plurality of frequency-processed images 72 are generated, the inference result acquisition unit 33 acquires a plurality of second inference results 74 each corresponding to one of the plurality of frequency-processed images 72. For example, the first inference result 73 and the second inference result 74 may be each a probability map that is the result of deriving, for each pixel, the probability that the pixel indicates a defect (flaw) in the corresponding image.

The detection result output unit 34 outputs a detection result 75 of the image of the defect (flaw) for the input image 71 by comprehensively evaluating the first inference result 73 and the second inference result 74. For example, the detection result output unit 34 may calculate an average value of the probability map as the first inference result 73 and the probability map as the second inference result 74 to generate an integrated probability map. Alternatively, the detection result output unit 34 may calculate a weighted average value of the probability map as the first inference result 73 and the probability map as the second inference result 74 to generate an integrated probability map. Alternatively, the detection result output unit 34 may generate an integrated probability map by applying a maximum value to the probability map as the first inference result 73 and the probability map as the second inference result 74. The detection result output unit 34 may derive the detection result 75 by performing, for example, threshold value processing on the integrated probability map.

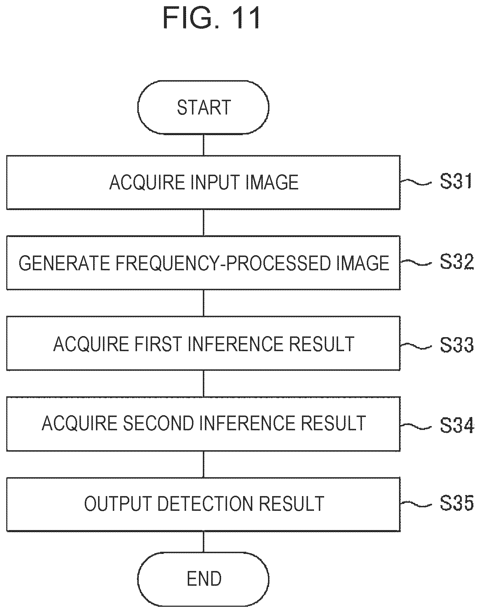

Fig. 11 is a flowchart illustrating an example of the flow of a defect detection process implemented by the CPU 201 executing the defect detection program 310. The defect detection program 310 is executed when, for example, the user gives an instruction to start the process by operating the input device 304.

In step S31, the input image acquisition unit 31 acquires the input image 71 that is input as a processing target of the image processing apparatus 30. The input image 71 is a radiographic image similar to the first image 41. In step S32, the frequency processing unit 32 enhances or extracts specific frequency components in the input image 71 acquired in step S31 to generate the frequency-processed image 72.

In step S33, the inference result acquisition unit 33 inputs the input image 71 acquired in step S31 to the trained defect detection model 320 to acquire the first inference result 73. In step S34, the inference result acquisition unit 33 inputs the frequency-processed image generated in step S32 to the trained defect detection model 320 to acquire the second inference result 74. In step S35, the detection result output unit 34 outputs the detection result 75 of the image of the defect (flaw) for the input image 71 acquired in step S31 by comprehensively evaluating the first inference result 73 acquired in step S33 and the second inference result 74 acquired in step S34.

As described above, the image processing apparatus 30 according to the embodiment of the disclosed technology outputs a detection result of the image of the defect (flaw) for the input image 71 using the defect detection model 320 trained by the learning apparatus 20. In the image processing apparatus 30 according to the present embodiment, the defect (flaw) is detected using the defect detection model 220 trained using the training data 60 augmented by the second image 44. Thus, the defect detection accuracy can be improved.

In addition, since the detection result 75 is output by comprehensively evaluating the first inference result 73 and the second inference result 74, it is possible to appropriately balance the detection accuracy and the detection sensitivity. The detection result 75 of the image of the defect (flaw) may be output based on only one of the first inference result 73 and the second inference result 74. When only the first inference result 73 is used, the frequency processing unit 32 and the frequency-processed image 72 are not necessary.

The foregoing description provides an example in which the image generation apparatus 10, the learning apparatus 20, and the image processing apparatus 30 are configured as separate computers. However, the image generation apparatus 10, the learning apparatus 20, and the image processing apparatus 30 may be configured as one or two computers. For example, the image generation apparatus 10 and the learning apparatus 20 may be configured as the same computer. Alternatively, the learning apparatus 20 and the image processing apparatus 30 may be configured as the same computer. Alternatively, the image generation apparatus 10, the learning apparatus 20, and the image processing apparatus 30 may be configured as the same computer.

Furthermore, the foregoing description provides an example in which the image handled in the image processing system 1 is a radiographic image acquired in non-destructive inspection of an industrial product. However, the disclosed technology is not limited to this configuration. The disclosed technology can be applied to any image (for example, optical images, magnetic resonance imaging (MRI) images, scanning electron microscope (SEM) images, ultrasound images, etc.)

that includes an image of a specific structural part of a target object in a specific frequency domain. Furthermore, the foregoing description provides an example in which the mathematical model to be trained is a defect detection model that detects a defect (flaw) included in a radiographic image. However, the disclosed technology is not limited to this configuration. The disclosed technology can be applied to a mathematical model that detects or recognizes a specific structural part of a target object present in a specific frequency domain in an image.

In the embodiment described above, for example, a hardware structure of a processing unit that executes various processes such as the first image acquisition unit 11, the frequency processing unit 12, the computational processing unit 13, the synthesis processing unit 14, the image output unit 15, the training data acquisition unit 21, the learning unit 22, the input image acquisition unit 31, the frequency processing unit 32, the inference result acquisition unit 33, and the detection result output unit 34 can be implemented using the following various processors. As described above, the various processors include, in addition to a CPU and a GPU that are general-purpose processors serving as various processing units by executing software (programs), a programmable logic device (PLD) that is a processor whose circuit configuration can be changed after manufacturing, such as an FPGA, a dedicated electrical circuit that is a processor having a circuit configuration designed exclusively for executing specific processing, such as an application specific integrated circuit (ASIC), and the like.

One processing unit may be constituted by one of these various processors, or may be constituted by a combination of two or more processors of the same type or different types (for example, a combination of a plurality of FPGAs or a combination of a CPU and an FPGA). Additionally, a plurality of processing units may be configured using a single processor.

Examples of configuring a plurality of processing units using a single processor include, first, a form in which, as represented by computers such as a client and a server, one processor is configured by a combination of one or more CPUs and software and this processor functions as a plurality of processing units. The examples include, second, a form in which, as represented by a system on chip (SoC) or similar technologies, a processor is used that implements the functions of the entire system, including a plurality of processing units, on a single integrated circuit (IC) chip. In this way, the various processing units are configured using one or more of the above-described various processors as a hardware structure. More specifically, the hardware structure of these various processors may be an electrical circuit (circuitry) in which circuit elements such as semiconductor elements are combined.

Moreover, the above embodiment has provided a description of a configuration in which various programs are stored (installed) in advance in a non-volatile memory, but is not limited to this configuration. The various programs may be provided in a form recorded on recording media such as a compact disc read only memory (CD-ROM), a digital versatile disc read only memory (DVD-ROM), and a universal serial bus (USB) memory. The various programs may be downloaded from an external apparatus via a network. In other words, the programs (i.e., program products) described in the present embodiment may be provided not only on a recording medium but also in a form distributed from an external computer.

In relation to the embodiment described above, the following appendices are further disclosed.

Appendix 1

An image generation apparatus including at least one first processor,
the at least one first processor being configured to:

acquire a first image;
enhance or extract mutually different frequency components in the first image to generate a plurality of frequency-processed images;
perform different computational processing on each of the plurality of frequency-processed images;
synthesize respective frequency components of the plurality of frequency-processed images on which the computational processing is performed to generate at least one second image; and
output the first image and the at least one second image as training data used for machine learning of a mathematical model that performs predetermined inference on an input image.

Appendix 2

The image generation apparatus according to appendix 1, wherein
the at least one first processor is configured to perform, as the computational processing, processing for applying mutually different weight coefficients to the plurality of frequency-processed images.

Appendix 3

The image generation apparatus according to appendix 1 or 2, wherein
the at least one first processor is configured to:

generate a first frequency-processed image including relatively low frequency components and a second frequency-processed image including relatively high frequency components; and
perform, as the computational processing, processing for applying a relatively small weight coefficient to the first frequency-processed image and applying a relatively large weight coefficient to the second frequency-processed image.

Appendix 4

The image generation apparatus according to any one of appendices 1 to 3, wherein
the at least one first processor is configured to perform, as the computational processing, processing on each of the plurality of frequency-processed images to enlarge a difference from an average value of brightness values for each pixel by a different magnification factor.

Appendix 5

The image generation apparatus according to any one of appendices 1 to 4, wherein
the at least one first processor is configured to:

perform filter processing on the first image to generate a first frequency-processed image; and
subtract frequency components of the first frequency-processed image from the first image to generate a second frequency-processed image.

Appendix 6

The image generation apparatus according to any one of appendices 1 to 5, wherein

the at least one first processor is configured to perform normalization processing on the first image and the at least one second image to normalize brightness.

Appendix 7

The image generation apparatus according to any one of appendices 1 to 6, wherein

the first image is a radiographic image including an image of a specific structural part of a target object in a specific frequency domain, and
the mathematical model is a model that detects the image of the specific structural part included in the radiographic image.

Appendix 8

A learning apparatus including at least one second processor,
the at least one second processor being configured to train the mathematical model using, as training data, the first image and the at least one second image provided from the image generation apparatus according to any one of appendices 1 to 7.

Appendix 9

The learning apparatus according to appendix 8, wherein the at least one second processor is configured to
perform normalization processing on the first image and the at least one second image to normalize brightness.

Appendix 10

An image processing apparatus including at least one third processor,
the at least one third processor being configured to output a detection result of an image of a specific structural part of a target object for an input image using the mathematical model trained by the learning apparatus according to appendix 8 or 9.

Appendix 11

The image processing apparatus according to appendix 10, wherein
the at least one third processor is configured to:

acquire the input image;
enhance or extract a specific frequency component in the input image to generate a frequency-processed image;
input the input image to the mathematical model to acquire a first inference result;
input the frequency-processed image to the mathematical model to acquire a second inference result; and
output the detection result by comprehensively evaluating the first inference result and the second inference result.

Appendix 12

An image generation method including processing performed by at least one first processor that an image generation apparatus has, the processing including:

acquiring a first image;
enhancing or extracting mutually different frequency components in the first image to generate a plurality of frequency-processed images;
performing different computational processing on each of the plurality of frequency-processed images;
synthesizing respective frequency components of the plurality of frequency-processed images on which the computational processing is performed to generate at least one second image; and
outputting the first image and the at least one second image as training data used for machine learning of a mathematical model that performs predetermined inference on an input image.

Appendix 13

A learning method including processing performed by at least one second processor that a learning apparatus has, the processing comprising
training the mathematical model using, as training data, the first image and the at least one second image provided using the image generation method according to appendix 12.

Appendix 14

An image processing method including processing performed by at least one third processor that an image processing apparatus has, the processing including
outputting a detection result of an image of a specific structural part of a target object for an input image using the mathematical model trained by the learning method according to appendix 13.
The disclosure of JP2022-146397 filed on September 14, 2022 is incorporated herein by reference in its entirety. All the documents, patent applications, and technical standards described in this specification are incorporated herein by reference to the same extent as if each individual document, patent application, and technical standard were specifically and individually indicated to be incorporated by reference.

**Claims**

1. An image generation apparatus comprising at least one first processor,
   the at least one first processor being configured to:

   acquire a first image;
   enhance or extract mutually different frequency components in the first image to generate a plurality of frequency-processed images;
   perform different computational processing on each of the plurality of frequency-processed images;
   synthesize respective frequency components of the plurality of frequency-processed images on which the computational processing is performed to generate at least one second image; and
   output the first image and the at least one second image as training data used for machine learning of a mathematical model that performs predetermined inference on an input image.

2. The image generation apparatus according to claim 1, wherein
   the at least one first processor is configured to perform, as the computational processing, processing for applying mutually different weight coefficients to the plurality of frequency-processed images.

3. The image generation apparatus according to claim 2, wherein
the at least one first processor is configured to:

> generate a first frequency-processed image including relatively low frequency components and a second frequency-processed image including relatively high frequency components; and
> perform, as the computational processing, processing for applying a relatively small weight coefficient to the first frequency-processed image and applying a relatively large weight coefficient to the second frequency-processed image.

4. The image generation apparatus according to claim 1, wherein
the at least one first processor is configured to perform, as the computational processing, processing on each of the plurality of frequency-processed images to enlarge a difference from an average value of brightness values for each pixel by a different magnification factor.

5. The image generation apparatus according to claim 1, wherein
the at least one first processor is configured to:

> perform filter processing on the first image to generate a first frequency-processed image; and
> subtract frequency components of the first frequency-processed image from the first image to generate a second frequency-processed image.

6. The image generation apparatus according to claim 1, wherein

> the at least one first processor is configured to perform normalization processing on the first image and the at least one second image to normalize brightness.

7. The image generation apparatus according to claim 1, wherein

> the first image is a radiographic image including an image of a specific structural part of a target object in a specific frequency domain, and
> the mathematical model is a model that detects the image of the specific structural part included in the radiographic image.

8. A learning apparatus comprising at least one second processor,
the at least one second processor being configured to train the mathematical model using, as training data, the first image and the at least one second image provided from the image generation apparatus according to any one of claims 1 to 7.

9. The learning apparatus according to claim 8, wherein

> the at least one second processor is configured to
> perform normalization processing on the first image and the at least one second image to normalize brightness.

10. An image processing apparatus comprising at least one third processor,
the at least one third processor being configured to output a detection result of an image of a specific structural part of a target object for an input image using the mathematical model trained by the learning apparatus according to claim 8.

11. The image processing apparatus according to claim 10, wherein the at least one third processor is configured to:

> acquire the input image;
> enhance or extract a specific frequency component in the input image to generate a frequency-processed image;
> input the input image to the mathematical model to acquire a first inference result;
> input the frequency-processed image to the mathematical model to acquire a second inference result; and
> output the detection result by comprehensively evaluating the first inference result and the second inference result.

12. An image generation method comprising processing performed by at least one first processor that an image generation apparatus has, the processing comprising:

> acquiring a first image;
> enhancing or extracting mutually different frequency components in the first image to generate a plurality of frequency-processed images;
> performing different computational processing on each of the plurality of frequency-processed images;
> synthesizing respective frequency components of the plurality of frequency-processed images on which the computational processing is performed to generate at least one second image; and
> outputting the first image and the at least one second image as training data used for machine learning of a mathematical model that performs predetermined inference on an input image.

**13.** A learning method comprising processing performed by at least one second processor that a learning apparatus has, the processing comprising

training the mathematical model using, as training data, the first image and the at least one second image provided using the image generation method according to claim 12.

**14.** An image processing method comprising processing performed by at least one third processor that an image processing apparatus has, the processing comprising

outputting a detection result of an image of a specific structural part of a target object for an input image using the mathematical model trained by the learning method according to claim 13.

## FIG. 1

```
┌─────────────────────────┐
│   IMAGE GENERATION      │ ──10
│      APPARATUS          │
└─────────────────────────┘
            │
            ▼  FIRST IMAGE, SECOND IMAGE
┌─────────────────────────┐
│   LEARNING APPARATUS    │ ──20
└─────────────────────────┘
            │
            ▼  TRAINED MATHEMATICAL MODEL
┌─────────────────────────┐
│   IMAGE PROCESSING      │ ──30
│      APPARATUS          │
└─────────────────────────┘
```

## FIG. 2

```
    101              102                 106
  ┌───────┐       ┌───────┐      ┌──────────────────┐
  │  CPU  │       │  RAM  │      │   NETWORK I/F    │
  └───────┘       └───────┘      └──────────────────┘
══════╪═══════════════╪══════════════╪════════════╪═══════ 107
      │               │              │            │
┌──────────────────┐  ┌───────────┐  ┌──────────────┐
│NON-VOLATILE MEMORY│  │  DISPLAY  │  │ INPUT DEVICE │
│ ┌──────────────┐ │  └───────────┘  └──────────────┘
│ │IMAGE GENERATION│──110   105            104
│ │   PROGRAM    │ │
│ └──────────────┘ │
└──────────────────┘
        103
```

# FIG. 3

10

## IMAGE GENERATION APPARATUS

| FIRST IMAGE ACQUISITION UNIT | 11 |

| FREQUENCY PROCESSING UNIT | 12 |

| COMPUTATIONAL PROCESSING UNIT | 13 |

| SYNTHESIS PROCESSING UNIT | 14 |

| IMAGE OUTPUT UNIT | 15 |

# FIG. 4

# FIG. 5

```
        ┌─────────────┐
        │    START    │
        └─────────────┘
               │
 ┌───────────────────────────────┐
 │      ACQUIRE FIRST IMAGE      │  ～S1
 └───────────────────────────────┘
               │
 ┌───────────────────────────────┐
 │   GENERATE FIRST AND SECOND   │  ～S2
 │  FREQUENCY-PROCESSED IMAGES   │
 └───────────────────────────────┘
               │
 ┌───────────────────────────────┐
 │   COMPUTATIONAL PROCESSING    │  ～S3
 └───────────────────────────────┘
               │
 ┌───────────────────────────────┐
 │     GENERATE SECOND IMAGE     │  ～S4
 └───────────────────────────────┘
               │
 ┌───────────────────────────────┐
 │ OUTPUT FIRST IMAGE AND SECOND IMAGE │  ～S5
 └───────────────────────────────┘
               │
        ┌─────────────┐
        │     END     │
        └─────────────┘
```

## FIG. 6

20

| 201 | | 202 | | 206 |
|---|---|---|---|---|
| CPU | 207 | RAM | | NETWORK I/F |

NON-VOLATILE MEMORY

DISPLAY
205

INPUT DEVICE
204

LEARNING PROGRAM —— 210

DEFECT
DETECTION MODEL —— 220

60

TRAINING DATA

41 — FIRST IMAGE | GROUND TRUTH LABEL — 45

44 — SECOND IMAGE | GROUND TRUTH LABEL — 46

—— 203

## FIG. 7

LEARNING APPARATUS —— 20

TRAINING DATA ACQUISITION UNIT —— 21

LEARNING UNIT —— 22

# FIG. 8

# FIG. 9

IMAGE PROCESSING APPARATUS — 30

INPUT IMAGE
ACQUISITION UNIT — 31

FREQUENCY
PROCESSING UNIT — 32

INFERENCE RESULT
ACQUISITION UNIT — 33

DETECTION RESULT
OUTPUT UNIT — 34

# FIG. 10

INPUT IMAGE ~71

ACQUISITION OF
FIRST INFERENCE RESULT

FREQUENCY PROCESSING 82

~73

FIRST INFERENCE RESULT

FREQUENCY-PROCESSED IMAGE ~72

ACQUISITION OF
SECOND INFERENCE RESULT

~74

SECOND INFERENCE RESULT

COMPREHENSIVE EVALUATION

DETECTION RESULT ~75

# FIG. 11

START

ACQUIRE INPUT IMAGE — S31

GENERATE FREQUENCY-PROCESSED IMAGE — S32

ACQUIRE FIRST INFERENCE RESULT — S33

ACQUIRE SECOND INFERENCE RESULT — S34

OUTPUT DETECTION RESULT — S35

END

## INTERNATIONAL SEARCH REPORT

| International application No. |
|---|
| **PCT/JP2023/028554** |

**A. CLASSIFICATION OF SUBJECT MATTER**

*G06T 7/00*(2017.01)i
FI: G06T7/00 350B

According to International Patent Classification (IPC) or to both national classification and IPC

**B. FIELDS SEARCHED**

Minimum documentation searched (classification system followed by classification symbols)

G06T7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); IEEE Xplore

**C. DOCUMENTS CONSIDERED TO BE RELEVANT**

| Category* | Citation of document, with indication, where appropriate, of the relevant passages | Relevant to claim No. |
|---|---|---|
| X | ZHANG, Shaomin et al. Medical Image Retrieval Using Empirical Mode Decomposition with Deep Convolutional Neural Network. BioMed Research International [online]. 28 December 2020, vol. 2020, pp. 1-12, [retrieved on 03 October 2023] Retrieved from the Internet: <URL: https://www.hindawi.com/journals/bmri/2020/6687733/> [3. Methodology]-[3.2.3. Network Training setting.], fig. 3 | 1-2, 5-10, 12-14 |
| A | | 3-4, 11 |
| Y | JP 2021-182328 A (HITACHI GE NUCLEAR ENERGY LTD) 25 November 2021 (2021-11-25) paragraphs [0021]-[0027], [0031]-[0049], [0056], fig. 4 | 1-10, 12-14 |
| A | | 11 |
| Y | JP 2001-056856 A (FUJI PHOTO FILM CO LTD) 27 February 2001 (2001-02-27) paragraphs [0036], [0037], [0044]-[0055], [0073]-[0078], fig. 1-3, 7, 20-21 | 1-10, 12-14 |
| A | | 11 |

☑ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 October 2023** | **17 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2023/028554**

### C.    DOCUMENTS CONSIDERED TO BE RELEVANT

| Category* | Citation of document, with indication, where appropriate, of the relevant passages | Relevant to claim No. |
|---|---|---|
| Y | JP 2009-515440 A (INTEL CORPORATION) 09 April 2009 (2009-04-09) paragraphs [0032]-[0045], fig. 6 | 1-3, 6-10, 12-14 |
| A | | 4-5, 11 |
| A | JP 2008-229161 A (FUJIFILM CORP) 02 October 2008 (2008-10-02) entire text, all drawings | 1-14 |

Form PCT/ISA/210 (second sheet) (January 2015)

INTERNATIONAL SEARCH REPORT
Information on patent family members

International application No.

**PCT/JP2023/028554**

| Patent document cited in search report | | | Publication date (day/month/year) | Patent family member(s) | | | Publication date (day/month/year) |
|---|---|---|---|---|---|---|---|
| JP | 2021-182328 | A | 25 November 2021 | (Family: none) | | | |
| JP | 2001-056856 | A | 27 February 2001 | EP | 1059811 | A2 | |
| | | | | paragraphs [0147], [0148], [0154]-[0160], [0183]-[0188], fig. 1-3, 7, 20-21 | | | |
| | | | | US | 6754398 | B1 | |
| JP | 2009-515440 | A | 09 April 2009 | US | 2006/0285766 | A1 | |
| | | | | paragraphs [0033]-[0046], fig. 6 | | | |
| | | | | WO | 2007/078829 | A1 | |
| | | | | EP | 1966994 | A2 | |
| | | | | TW | 200803467 | A | |
| | | | | CN | 1991908 | A | |
| JP | 2008-229161 | A | 02 October 2008 | US | 2008/0232667 | A1 | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020017211 A
- WO 2020175446 A
- JP 2022146397 A